# EUROPEAN PATENT APPLICATION

(11) **EP 3 096 426 A1**
(43) Date of publication of application: **23.11.2016**
(21) Application number: 15168883.5
(22) Date of filing: 22.05.2015
(51) Int. Cl.: H02G 5/06, H01B 17/12, H01B 17/42, H01C 7/12

(54) **A HIGH-VOLTAGE INSULATOR FOR USE IN A METALLIC ENCLOSURE FILLED WITH AN INSULATING GAS AND ARRANGEMENT COMPRISING THE HIGH-VOLTAGE INSULATOR**

(71) Applicant: ABB Technology AG, 8050 Zürich (CH)
(72) Inventor: Donzel, Lise, 5430 Wettingen (CH); Gremaud, Robin, 3007 Bern (CH); Gasparini, Rico, 5408 Ennetbaden (CH)
(74) Representative: ABB Patent Attorneys

(57) **Abstract**

The high-voltage insulator (20) is for use in a metallic enclosure (10) filled with an insulating gas and comprises an insulating body (21) having at least a connection piece (25) of a first mechanical connection assembly (30) and at least a connection piece (26) of a second mechanical connection assembly (40). The insulating body (21) is designed in a manner to avoid an accumulation of electrical charges on the surface (28) of the insulator (20) when after placing the insulator (20) in the metal enclosure (10) and applying a high electric potential to the first mechanical connection assembly (30) and ground potential to the second mechanical connection assembly (40) the surface (28) of the insulator (20) is exposed to the insulating gas and to a strong electric field.

The insulating body (21) comprises an insulating matrix (27) and a semiconductive insert (50) which is embedded in the insulating matrix, and a first end (51) of the insert (50) is electrically connected to a portion of the connecting piece (25) of the first mechanical connection (30) assembly to which the high-voltage potential is applicable and a second end (52) of the insert (50) is electrically connected to a portion of the connecting piece (26) of the second mechanical connection assembly (40) to which the ground potential is applicable.

Such a high-voltage insulator can be manufactured in cost and time manner and at the same time is distinguished by a robust design.

## Description

### TECHNICAL FIELD

The invention relates to a high-voltage (HV) insulator according to the introductory part of claim 1. Such an insulator usually is designed as a spacer and supports a DC conductor of a gas-insulated, metal-enclosed (GIS) HVDC arrangement or at least one phase current conductor of a GIS HVAC arrangement. The insulator can also be designed as a pull rod of a switching device of the HVDC or HVAC arrangement.

The arrangements are operated with nominal voltages between several and several hundred kV and with nominal currents up to 100 kA. During operation charge accumulation on the insulating surface of the insulator occurs, in particular in HVDC arrangements. One possible way to reduce the undesired surface charging is to apply a resistive coating on the insulating surface of the insulator.

### PRIOR ART

Insulators with a resistive coating for in HVDC arrangements are described in DE 36 34 946 A1 and in JP 2010022081. These insulators comprise thin a resistive coating which is applied to the surface of an insulating core. The resistive coating consists of a resinous binder and contains a powdered filler in the form of chromium oxide or iron oxide or mixtures thereof (DE 36 34 946 A1) or is performed as a diamond-like carbon (DLC) film (JP 2010022081). The coating improves the removal of charges which are captured in the surface of the insulator and ensures a reliable control of the electrical field stressing the insulator.

However, a resistive coating consisting of a resinous binder and containing a powdered filler in the form of chromium oxide or iron oxide is usually applied as varnish onto the HV insulator. To ensure that the coating adheres to the insulating material of the insulator, the surface of the insulator needs to be treated. Since the insulator is produced by casting and curing in a mould, after curing the insulator must be extracted from the mould. A layer of a release agent which is applied to the mould facilitates the extraction process. A residue of the release agent is still present on the surface of the insulator after extraction from the mould and prevents the adhesion of the coating. Removing of the release agent residue, for example by plasma treatment, is cumbersome and increases the production costs.

A DLC coating is applied by physical vapour deposition or by plasma assisted chemical vapour deposition. This requires a dedicated deposition vessel that can be evacuated. Thus such an application of the coating is expensive.

Furthermore a coating applied with the known methods can be damaged and locally removed by scratching during handling the HV insulator.

### DESCRIPTION OF THE INVENTION

It is an object of the invention as described in the patent claims to specify a HV insulator which can be manufactured in cost and time saving manner and which at the same time is distinguished by a robust design.

The invention supplies a high-voltage insulator for use in a metallic enclosure filled with an insulating gas, wherein the insulator comprises an insulating body having at least a connection piece of a first mechanical connection assembly and at least a connection piece of a second mechanical connection assembly, and wherein the insulating body is designed in a manner to avoid an accumulation of electrical charges on the surface of the insulator when after placing the insulator in the metal enclosure and applying a high electric potential to the first mechanical connection assembly and ground potential to the second mechanical connection assembly the surface of the insulator is exposed to the insulating gas and to a strong electric field. The insulating body comprises an insulating matrix and a semiconductive insert which is embedded in the insulating matrix. A first end of the insert is electrically connected to a portion of the connecting piece of the first mechanical connection assembly to which the high-voltage potential is applicable and a second end of the insert is electrically connected to a portion of the connecting piece of the second mechanical connection assembly to which the ground potential is applicable.

The insulator according to the invention comprises a semiconductive insert which is embedded in its insulating body. Thus the insulator can be manufactured in a cost and time saving manner in a simple casting and curing process. An expensive and accident-sensitive applying of a resistive coating on an insulating core is no more required. Since the semiconductive insert is embedded in the interior of the insulator an infringement of the resistive coating is prevented. Thus the insulator according to the invention is distinguished by a robust design and enables a reliable removal of undesired charges trapped during operation on its field-stressed surface.

A current enhancement factor of the insulator can be from 5 to 20, wherein the current enhancement factor is the ratio between the maximum current density, which the insulator surface is able to dissipate, and the maximum current density, which the insulator surface of an equally designed insulator is able to dissipate, when the insulating body of the equally designed insulator only comprises the insulating matrix.

The distance between the insert and the surface of the insulator can be at least 10² µm when the resistivity of the insulation matrix is at most a factor 20 higher than the resistivity of the insert.

The distance between the insert and the surface of the insulator can be at least 2•10⁴ µm when the resistivity of the insulation matrix is at least a factor 50 higher than the resistivity of the insert.

The whole insert can be arranged in a peripheral area of the insulating body.

The insert can comprise a plurality of fibres which form a fibre structure and which comprise insulating fibres which are coated with a semiconductive material and/or semiconductive fibres.

The fibre structure can comprise at least one of a mat, a fabric or a filament wound body.

The insulating fibres can be coated before manufacturing the fibre structure or alternatively after manufacturing the fibre structure.

The fibres can be based on at least one of a polymer, a ceramic or a glass, like fibres based on polyester, aramid, Al₂O₃, ZrO₂ or SiC. When the fibres are based on a polymer the semiconductive material can be an unfilled or a filled organic substance, like a polyaniline. When the polymer fibres are resistant against comparatively high temperatures the semiconductive material can also be a doped metal oxide, in particular on the basis of ZnO, SnO₂ or SiC. When the fibres are based on ceramic or glass the semiconductive material can comprise a doped metal oxide, in particular on the basis of ZnO, SnO₂ or SiC.

### BRIEF DESCRIPTION OF THE DRAWINGS

These and other characteristics of the invention will be clear from the following description of preferential forms, given as non-restrictive examples, with reference to the attached drawings, wherein:
- fig.1: is a view on a section along an axis A of symmetry of an embodiment of a high-voltage insulator according to the invention which is arranged in a grounded metallic enclosure and which supports a high-voltage conductor,
- fig.2: is an enlargement of a dashed-rimmed portion II of the support insulator according to fig.1,
- fig.3: is an enlargement of a similar portion of a support insulator according to prior art, which has the same size as the insulator according to fig.1,
- fig.4: is a diagram which is used in order to determine whether the insulator according to fig.1 accepts or does not accept an electric field which is applied during operation,
- fig.5: is a view on a section along an axis A of symmetry of an embodiment of a high-voltage insulator according to the invention which is configured as a switching rod for use in a metal-enclosed high-voltage switching device, and,
- fig.6: is a view on an active part of a metal-enclosed high-voltage surge arrester in which a plurality of four embodiments of the insulator according to the invention is used to stabilize mechanically a column of varistors and to bias the varistor column with a contact force.

### DETAILD DESCRIPTION OF PREFERENTIAL EMBODIMENTS OF THE

### INVENTION

In the figures same reference symbols are used for identical parts and repetitive reference symbols may be omitted.

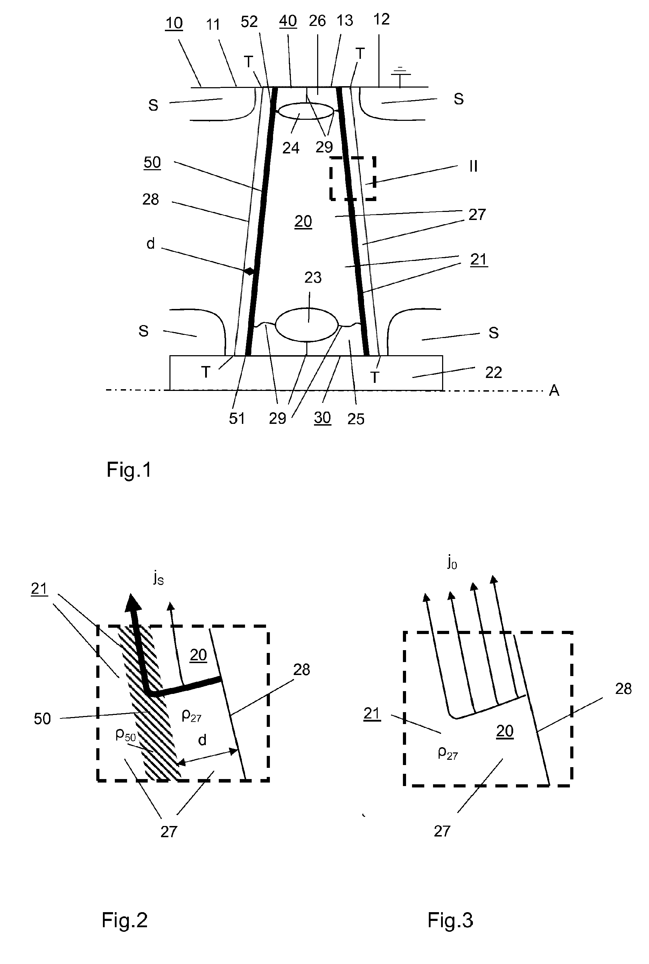

Fig.1 shows a tubular section of a grounded metallic casing 10 of a gas-insulated high-voltage (GIS) arrangement, The casing 10 is filled with an insulating gas, which typically comprises a gas like CO₂, N₂, SF₆ or a fluoroketone or mixtures thereof and which receives a DC conductor or a single phase current conductor of a three phase AC system. The metallic casing 10 comprises two metallic flange sections 11, 12 and a metallic distance ring 13. Between the two flange sections 11, 12 is mounted in a gas-tight manner a disk-like high-voltage (HV) insulator 20 which comprises an insulating body 21. The insulating body 21 supports the grounded distance ring 13 on its outer side and a metallic cast-in fitting 22 in the center of the disk. The cast-in fitting 22 forms a section of the DC conductor or the single phase current conductor. The cast-in fitting 22 is extended along an axis A of cylindrical symmetry such that the tubular casing 10 and the insulator 20 are arranged coaxially.

The reference numeral S identifies four annular shield electrodes which are kept on the electrical potential of the metallic enclosure 10 resp. the cast-in fitting 22 and which during operation of the GIS arrangement screen triple points T from the electric field.

In order to improve the control of the electric field two annular electrodes 23 and 24 are cast in coaxial arrangement in the insulating body 21. The electrode 23 is arranged in an annular central section of the insulating body 21 which forms a connection piece 25 of a mechanical connection assembly 30. The assembly 30 further comprises the cast-in fitting 22 of the HV current conductor which is fastened to the annular connection piece 25 of the insulating body 21 in a casting process. The casting process uses a curable resin, like an epoxy, to which a filler, like aluminium oxide, is added. The electrode 24 is arranged in an annular outside section of the insulating body 21 which forms a connection piece 26 of a mechanical connection assembly 40. The assembly 40 further comprises the grounded metallic distance ring 13 which is fastened to the annular connection piece 26 of the insulating body 21, typically by clamping or casting.

The insulating body 21 comprises an insulating matrix 27 which is formed during the curing of the filled resin and a semiconductive insert 50 which is embedded in the insulating matrix 27 and which is arranged in the proximity of the surface 28 of the HV insulator 20. A first end 51 of the insert 50 via the electrode 23 is electrically connected to a surface portion of the connecting piece 25 which is in mechanical and electrical contact with the cast-in fitting 22 to which the high-voltage potential is applied. A second end 52 of the insert 50 via the electrode 24 is electrically connected to a surface portion of the connecting piece 26 which is in mechanical and electrical contact with the metallic distance ring 13 to which the ground potential is applied.

In the casting process the cast-in fitting 22, the insert 50, the electrodes 23 and 24 and current connectors 29 forming the electrical connection between the insert 50, the electrodes 23, 24 and the mechanical connection assembles 30, 40 are fixedly secured in a mould. The mould is then filled with the curable resin composition which embeds the fixedly secured parts and which penetrates the insert 50 when the insert comprises a structure with open pores. After curing the resin at elevated temperatures the HV insulator 20 is achieved and can be removed from the mould.

The insert 50 of the HV insulator according to fig.1 typically comprises two laminar semiconductive layers. Each layer is embedded in the insulating matrix 27 and is arranged with a distance d to the left resp. to the right front face, which form the surface 28 of the insulator 20. Each of the semiconductive layers is electrically connected to the electrode 23 resp. 24 and via this electrode to the mechanical connection assembly 30 resp. 40. The thickness of the layers ranges between some µm and some thousand µm. As the case may be, typically in case of a thin insulator, the insert 50 can only comprise a single body which fills the main part of the insulating body 21.

The semiconductive insert 50 avoids the accumulation of electrical charges on the surface 28 of the insulator 20 resp. of the insulating body 21 when during operation of the GIS arrangement the cast-in fitting 22 is connected to the positive pole of a high-voltage DC source resp. to a phase current conductor of a high-voltage AC source and the metallic enclosure 10 to the negative pole of the DC source resp. to ground.

As shown in fig.2 the semiconductive insert 50 causes a maximum current density js in the insulator 20. Such a current density dissipates surface currents and surface charges from the insulator surface 28 which are accumulating from the gas side, for example from the emission of charges from particles or from surface roughness, like a surface roughness of the metallic casing 10, the cast-in fitting 22 or the shields S, or from the side of the solid insulation, for example from a space charge accumulation in the solid insulation material of the insulation body 21.

As shown in fig.3 an equally designed insulator, however without any semiconductive insert 50, exhibits a much smaller current density jₒ and thus during operation only dissipates a comparitively small portion of the surface currents and surface charges.

The ratio between the maximum current density jₛ and the smaller current density jₒ defines a current enhancement factor F. Since the current density dissipates surface currents and surface charges from the insulator surface 28 the current enhancement factor is the magnitude of the dissipation of surface currents and surface charges which are accumulating from the gas side or from the solid insulation side in the insulator 20 according to fig.2 compared with the magnitude of the dissipation in the equally designed insulator 20 according to fig.3 in which the insulating body is without the insert 50 and only comprises the insulating matrix 27. Hereby the insulator according to fig.2 and the insulator according to fig.3 are operated under identical conditions.

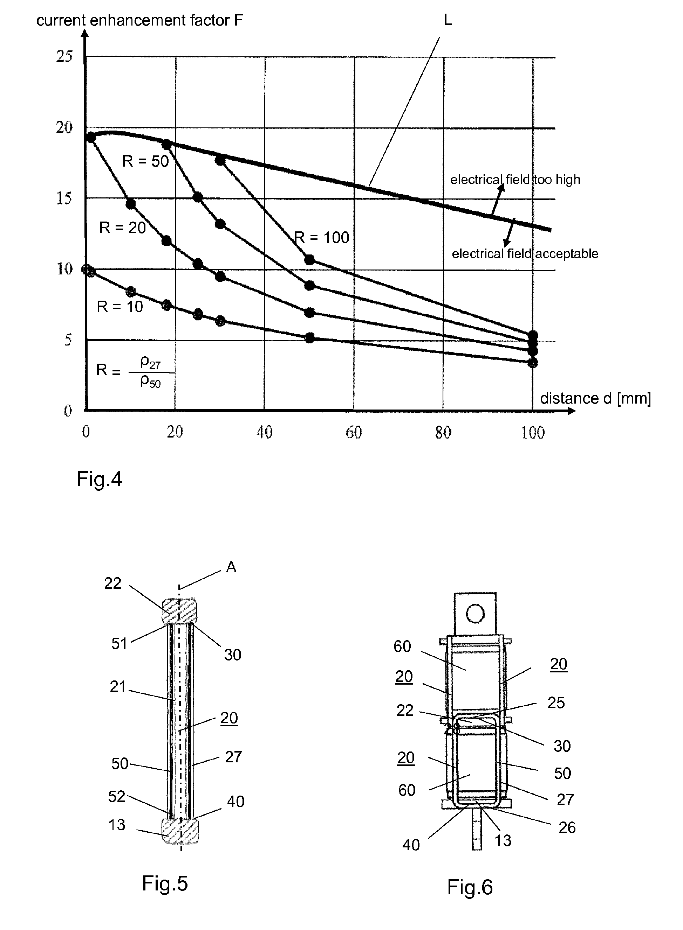

In fig.4 the current enhancement factor F is shown in function of the distance d in millimetre for a plurality of four embodiments of the insulator 20. The four insulators distinguish from each other in the choice of a resistivity factor R which defines the ratio between the resistivity ρ₂₇ of the insulating matrix 27 and the resistivity ρ₅₀ of the insert 50. A curve L defines the critical value of the electrical field strength which during operation of the GIS arrangement is effective in the HV insulator 20. The shown the four embodiments of the insulator 20 accept the electrical field strength in the region below the curve L and should not be exposed to the electrical field strength in the region above the curve L.

Fig.4 show that a current enhancement factor F between 5 and 20 results in embodiments of the insulator 20 according to the invention which can be operated in a secure and reliable manner. Fig.4 further shows that the distance d is at least 10² µm when the resistivity factor R, that means the ratio between the resistivity ρ₂₇ of the insulation matrix 27 and the resistivity ρ₅₀ of the insert 50 is at most 20, resp. that the distance d is at least 2•10⁴ µm when the resistivity factor R is higher 50.

An amended disspation of the surface currents and the surface charges from the insulator surface 28 can principally be achieved when the distance d between the insert 50 and the surface 28 of the HV insulator 20 is between 10² and 10⁵ µm resp. when the resistivity factor R ranges between 10 and 1000.

Typical values of the resistivity ρ₅₀ of the insert 50 range between 10⁹ and 10¹² Ωm and of the insulating matrix 27 between 10¹² and 10¹⁵ Ωm.

The insert 50 typically comprises a plurality of fibres which form a fibre structure and which comprise insulating fibres being coated with a semiconductive material and/or semiconductive fibres. The fibre structure can be positioned along the inner surface of the mould and can be impregated with the curable resin composition. The impregnation process includes the voidfree impregnation of the complete fibre structure and the formation of a thin insulating layer between the surface of the fibre structure and the inner surface of the mould which secures the minimum distance d of approximately 10² µm between the insert 50 and the surface 28 of the HV insulator. The fibre structure comprises at least one of a mat, a fabric or a filament wound body.

The insulating fibres can be coated before manufacturing the fibre structure. As the case may be the insulating fibres can also be coated after manufacturing the fibre structure.

The fibres are based on at least one of a polymer, a ceramic or a glass and typically comprise fibres based on polyester, aramid, Al₂O₃, ZrO₂ or SiC.

Preferably the fibres are based on a polymer. The semiconductive material then comprises an unfilled or a filled organic substance, like a polyaniline. When the polymer fibres are resistant against comparatively high temperatures, like fibres based on polyamide-imide, the semiconductive material can also be a doped metal oxide, in particular on the basis of ZnO, SnO₂ or SiC.

When the fibres are based on ceramic or glass the semiconductive material comprises a doped metal oxide, in particular on the basis of ZnO, SnO₂ or SiC.

The insulating body 21 can be shaped as a circular disk or as a hollow cone.

In a modified embodiment of the HV insulator according to fig.1 the insulator 20 can support three cast-in fittings which are spaced from one another and which are provided for forming sections of each of the phase current conductors of a three-phase AC system.

In a further embodiment of the HV insulator 20 according to the invention the insulating body 21 is shaped as a rod. Such a design of the insulator 20 is shown in fig.5. The shown insulator 20 comprises the insulating body 21 which is configured as a hollow rod. The hollow rod extends along an axis A and comprises in coaxial arrangement the semiconductive insert 50 and the insulating matrix 27. The insulating matrix 27 in axial direction ensures tension and pressure resistance and comprises mainly axially and circumferentially extended fibres, like glass or polymer fibres, which together with the semiconductive insert 50 are embedded in a hardened resin, in particular on the basis of epoxy or polyester. The upper end of the rod 21 is configured as the mechanical connection assembly 30 to which high voltage potential can be applied, whereas the lower end of the rod 21 is configured as the mechanical connection assembly 40 to which ground potential can be applied. The upper 51 resp. the lower end 52 of the semiconductive insert 50 is electrically connected to the mechanical connection assembly 30 resp. 40.

Such an embodiment of the insulator according to the invention can be used as switching rod in a gas-insulated HV switching device, in particular in a HV circuit breaker as described in DE 24 29 475 A1.

In an embodiment of the HV insulator 20 according to the invention, which is shown in fig.6, the insulator 20 is shaped as an elongated HV insulating loop with two opposing ends. The loop 20 comprises the insulating matrix 27 and the semiconductice insert 50 which is embedded in the insulating matrix 27. The insulating matrix 27 comprises fibres, like glass or polymer fibres, which are extended along the circumference of the loop and which together with the semiconductive insert are embedded in a hardened resin, in particular on the basis of epoxy or polyester. The upper end of the loop 20 comprises the connection piece 25 of the mechanical connection assembly 30. The lower end of the loop 20 comprises the connection piece 26 of the mechanical connection assembly 40. The upper end of the loop resp. the connection piece 25 is supported on a fitting 22 of the connection assembly 30 to which high voltage can be applied. The lower end of the loop resp. the connection piece 26 is supported on a fitting 13 of the connecrtion assembly 40. The fitting corresponds to the distance ring 13 of the embodiment according to fig.1 and thus can be applied either to ground potential or to a further electric potential which lies between ground potential and HV potential. An upper resp. an lower end of the semiconductive insert 50 is electrically connected to the connection piece 25 resp. 26 and thus also to the fitting 22 resp. 13 of the mechanical connection assembly 30 resp. 40.

Such an embodiment of the insulator 20 according to the invention is used as a tensioning element in an active part of a metal-enclosed high-voltage surge arrester as described in US 2005/0105238 A1. The tensioning element resp. the loop and the further loops 20 stabilize mechanically a column of varistors 60 and biases the varistor column with a contact force.

### List of Reference Signs

- 10: metallic casing
- 11, 12: flange sections
- 13: distance ring, fitting
- 20: high voltage (HV) insulator, HV insulating rod, HV insulating loop
- 21: insulating body
- 22: cast-in fitting, fitting
- 23, 24: annular electrodes
- 25, 26: connecrtion pieces
- 27: insulating matrix
- 28: surface of the HV insulator
- 29: current connectors
- 30, 40: mechanical connection assemblies
- 50: semiconductive insert
- 51, 52: ends of the semiconductive insert
- 60: varistors
- A: axis
- d: distance
- F: current enhancement factor
- L: curve
- R: resistivity factor
- S: shield
- T: triple points
- ρ₂₇: resistivity of the insulating matrix 27
- ρ₅₀: resistivity of the insert 50

## Claims

1. A high-voltage insulator (20) for use in a metallic enclosure (10) filled with an insulating gas, wherein the insulator comprises an insulating body (21) having at least a connection piece (25) of a first mechanical connection assembly (30) and at least a connection piece (26) of a second mechanical connection assembly (40), and wherein the insulating body (21) is designed in a manner to avoid an accumulation of electrical charges on the surface (28) of the insulator (20) when after placing the insulator (20) in the metal enclosure (10) and applying a high electric potential to the first mechanical connection assembly (30) and ground potential to the second mechanical connection assembly (40) the surface (28) of the insulator (20) is exposed to the insulating gas and to a strong electric field, **characterised in that** the insulating body (21) comprises an insulating matrix (27) and a semiconductive insert (50) which is embedded in the insulating matrix, and that a first end (51) of the insert (50) is electrically connected to a portion of the connecting piece (25) of the first mechanical connection (30) assembly to which the high-voltage potential is applicable and a second end (52) of the insert (50) is electrically connected to a portion of the connecting piece (26) of the second mechanical connection assembly (40) to which the ground potential is applicable.

2. The insulator according to claim 1, **characterized in that** a current enhancement factor (F) of the insulator (20) is from 5 to 20, wherein the current enhancement factor is the ratio between the maximum current density (j_{S}), which the insulator surface (28) is able to dissipate, and the maximum current density (j₀), which the insulator surface (28) of an equally designed insulator (20) is able to dissipate, when the insulating body (27) of the equally designed insulator (20) only comprises the insulating matrix (27).

3. The insulator according to claim 1, **characterized in that** the distance (d) between the insert (50) and the surface (28) of the insulator (20) is at least 10² µm when the resistivity (ρ₂₇) of the insulation matrix (27) is at most a factor 20 higher than the resistivity (ρ₅₀) of the insert (50).

4. The insulator according to claim 1, **characterized in that** the distance (d) between the insert (50) and the surface (28) of the insulator (20) is at least 2•10⁴ µm when the resistivity (ρ₂₇) of the insulation matrix (27) is at least a factor 50 higher than the resistivity (ρ₅₀) of the insert (50).

5. The insulator according to any of claims 1 to 4, **characterized in that** the whole insert (50) is arranged in a peripheral area of the insulating body (27).

6. The insulator according to any of claims 1 to 5, **characterized in that** the insert (50) comprises a plurality of fibres which form a fibre structure and which comprise insulating fibres which are coated with a semiconductive material and/or semiconductive fibres.

7. The insulator according to claim 6, **characterized in that** the fibre structure comprises at least one of a mat, a fabric or a filament wound body.

8. The insulator according to any of claims 6 or 7, **characterized in that** the insulating fibres are coated before manufacturing the fibre structure.

9. The insulator according to any of claims 6 or 7, **characterized in that** the insulating fibres are coated after manufacturing the fibre structure.

10. The insulator according to any of claims 6 to 9, **characterized in that** the fibres are based on at least one of a polymer, a ceramic or a glass, like fibres based on polyester, aramid, Al₂O₃, ZrO₂ or SiC.

11. The insulator according to claim 10, **characterized in that** the fibres are based on a polymer and that the semiconductive material is an unfilled or a filled organic substance, like a polyaniline, or a doped metal oxide, in particular on the basis of ZnO, SnO₂ or SiC.

12. The insulator according to claim 10, **characterized in that** the fibres are based on ceramic or glass and that the semiconductive material comprises a doped metal oxide, in particular on the basis of ZnO, SnO₂ or SiC.

13. The insulator according to any of claims 1 to 12, **characterized in that** the insulator (20) is shaped as a circular disk or as a hollow cone.

14. The insulator according to any of claims 1 to 12, **characterized in that** the insulator (20) is shaped as a rod (20).

15. The insulator according to any of claims 1 to 12, **characterized in that** the insulator is shaped as an elongated loop (20) with two opposing ends, that the connection pieces (25, 26) of the first and the second connection assembly (30, 40) each comprise one of the two ends of the loop (20), and that each end of the loop (20) is shaped in a manner to permit the end to rest on a fitting (22, 13) of the first (30) or second connection assembly (40).

16. An arrangement comprising an insulator (20) according to any of claims 1 to 15.
